# EUROPEAN PATENT SPECIFICATION

(11) **EP 2 960 184 B1**
(45) Date of publication and mention of the grant of the patent: **11.10.2017**
(21) Application number: 15171812.9
(22) Date of filing: 12.06.2015
(51) Int. Cl.: B65G 1/04, B65G 1/137

(54) **AUTOMATIC STORE, SUITABLE IN PARTICULAR FOR AUTOMATIC PHARMACIES**
AUTOMATISCHER LADEN, INSBESONDERE GEEIGNET FÜR AUTOMATISCHE APOTHEKEN
SYSTÈME DE STOCKAGE AUTOMATIQUE, CONVENANT EN PARTICULIER POUR DES PHARMACIES AUTOMATIQUES

(30) Priority: 13.06.2014 IT FI20140147
(43) Date of publication of application: 30.12.2015
(73) Proprietor: Bromas-Log S.r.l., 59100 Prato (PO) (IT)
(72) Inventor: Brogi, Marco, 59100 Prato (PO) (IT)
(74) Representative: Fanfani, Stefano

(56) References cited:
- EP-A1- 1 681 247
- EP-A1- 2 256 703
- DE-A1- 19 723 220
- JP-A- 2006 273 465

## Description

### Technical field

The present invention belongs to the sector of the automatic stores for storing articles packed in boxes through automatic load and pick-up management mechanisms. In particular, the characteristics of the automatic store are particularly advantageous when applied to the sector of automatic pharmacies.

The present invention can also be advantageously applied in automatic stores comprising auxiliary preservation systems including, for instance, temperature control.

### Status of the art

Automatic stores have been developed for some years for retail points of sales which, thanks to automatic product recognition systems and computerized managements, simplify and speed-up the storage and pick-up of the packed products. They are stand-alone, integrated, easily transportable apparatuses which are at the same time also of the modular type, i.e. can be composed of several identical assemblies put together to form stores of various dimensions and storage capacities; in the normal use the operators don't access the inside of these stores but for maintenance or repair operations.

Therefore, these are systems featuring a specificity of their own with respect to the solutions adopted in the shipping centers, for instance in the express courier's premises.

For instance, patent application EP 1681247 A1 describes an apparatus to create a sequence of products to be put on pallets or the like which also performs a temporary accumulation function. It is evident that such an apparatus does not perform the storage function, nor does it offer the protection that shall be provided to pharmacy products. In any case, EP 1681247 A1 describes an apparatus that temporarily lifts products, and puts them onto transfer belts used for temporary storing purposes, from which the products are subsequently transferred onto the pallets used for transportation.

In particular, the solution described therein comprises all temporary storage shelves formed of movable conveyor belts and an insertion assembly used for insertion onto the stands, called "conveying unit", separated from the "transfer assembly", which, on the contrary, is used to unload the products.

The characteristics of EP 1681247 A1 are different from those of the automatic store according to the present patent application, which comprises a movable temporary accumulation device and a transfer assembly which shifts the products onto fixed shelves; this solution, besides being more flexible, is also much less expensive than that described in EP 1681247 A1 in which, conversely, the shelves are made up of conveyor belts.

Actually, EP 1681247 A1 describes a device for sorting materials to be loaded onto trucks, whereas the present patent application describes a store wherein the products can stay for an undefined period of time. So, the present store comprises stands composed of fixed shelves superimposed to each other, on which the products are stored, displaced, and picked-up in a fully independent manner, by even aligning them on aisles orthogonal to the individual shelves.

The automatic stores of the known types are generally provided with a conveyor belt based loading device, on the mat of which the products to be stored are put on specially developed stands, composed of a plurality of longitudinal shelves parallel to a horizontal direction (X) and vertically superimposed to each other according to a direction (Y); along every shelf the products are aligned in the direction (Z) of the depth, so as to form transversal aisles.

Upon inserting a package, the store's control and management system shall identify it, which can take place automatically or be managed by an operator.

Low-turnover stores take only account of the limitations resulting from the geometry of the packages, whereas high-turnover stores feature spaces dedicated to specific products, so as to reduce pick-up times, at the cost of increased overall dimensions because of the need for leaving empty spaces. Low-turnover stores comprise Cartesian robots which put the packages in position after picking-up them from an insertion point or from an accumulation belt, as described in DE 19509951 (A1), which discloses the features of the preamble of claim 1, or in EP 2522599 (A1). However, Cartesian robots find difficulties in picking-up packages that, on the same stand, are located behind other different packages, furthermore, the need for covering, for every box, the complete route, makes this option slower than the high-turnover one and, above all, is little suitable for meeting the pick-up and loading requirements simultaneously. In low-turnover machines, every operation shall be performed individually, but for rare exceptions. Even the presence of a store on board the Cartesian robot, as in EP 2256703 A1, though speeding-up the execution of several simultaneous requests, does not fully overcome this important limitation. Even the presence of several Cartesian robots operating together, besides increasing the costs, experiences evident difficulties related to the simultaneous movements inside a reduced space.

High-turnover stores generally operate with pick-up systems that take advantage of the drop by gravity of the products which are usually put on tilted stands from which they are made drop by appropriate selectors, in order for them to be subsequently transported up to the output mouth by a conveyor belt. The gravity-based solutions are little suitable for delicate products and also need the tilt of the shelves to be adjusted as a function of the weight of the product.

The functional limitations featuring both types of store, i.e. the high- or low-turnover ones, determine the need for the points of sale of being equipped with both of them in order to automatically manage the complete variety of the products dealt with.

### Purposes and summary of the invention

The automatic store according to the invention as claimed in claim 1 overcomes the limitations of the present status of the art as highlighted here above, while simultaneously allowing to get a low-turnover system that is particularly fast both in storing and picking-up articles, so as to achieve speeds comparable to those of high-turnover, while retaining the high operating versatility of low-turnover, while obtaining surprising advantages in terms of space occupation.

As a matter of fact, this innovative solution makes it possible to directly handle even a product that does not occupy the first position in its own aisle, thus avoiding the need for leaving empty spaces to temporarily transfer thereto those products which occupy the aisle in front of the requested package.

The automatic store can also comprise an innovative delivery assembly which makes it easily possible to manage pick-up from several output mouths and, if necessary, to send the products to remote output mouths.

The insertion assembly also surprisingly meets the modularity and fast operability requirements, being provided with package grasping means and with appropriate delivery devices for delivering them onto the accumulation devices.

These advantages and others are achieved thanks to the combined use of a temporary accumulation device and of a vertically movable transfer assembly cooperating with an innovative handler capable not only of making the packages move along the aisles, but also of lifting them.

The temporary accumulation device is advantageously comprised of a conveyor belt, often located in the stand in replacement of a shelf, which receives the packages from an insertion assembly and makes them slide towards the inside of the store, from which they are picked-up by a handler slidingly coupled with the structure of a vertically movable transfer assembly, which comprises a horizontal conveyor belt, on whose mat the handler transfers the packages picked-up from the mat of the belt of the temporary accumulation assembly.

The kinematic mechanism of the belt of the transfer assembly is independent of the kinematic mechanism of the handler, which is controlled to place the packages onto the mat of the conveyor belt, account being taken of the final destination.

The handler and the transfer assembly also take care of the subsequent delivery of the products, either directly or via a delivery assembly. Thanks to an appropriate management system, the mats of the belts of the movable transfer assembly and of the temporary accumulation device can also perform the function of a buffer, so as to speed-up transfers and reducing the distances to be covered by the handler.

Very conveniently can said handler comprise a small store for a further temporary storage of one or several packages. In a particularly simple embodiment of the delivery assembly, the transfer assembly can deliver the packages directly to an output container. In a different embodiment, the delivery assembly also comprises an intermediate device, advantageously a delivery conveyor belt, featuring a fixed or movable structure and such, for instance, as to vertically move, so as to make it possible to unload packages via several output ports located at different heights.

It is worth underlying the advantage resulting from the joint action of the movable transfer assembly and of the handler whenever it is necessary to unload a package that is located inside an aisle, i.e. a package that does not directly face to the handler.

By taking advantage of the coordination of the movements of the pincers assembly of the handler according to (Z) with the movement of the belt according to (X), the preceding boxes can be quickly put on the belt of the transfer assembly, up to clearing the box of interest. Furthermore, handlings don't take place any longer one after the other, as in traditional stores, but in a continually coordinated manner.

The modularity of the automatic store can be obtained not only by varying the dimensions of the stand, but also through the repetition of several stands and the possibility of equipping several output ports. In order to meet specific requirements, the use of several accumulation devices or of several transfer assemblies for one and the same stand can be provided.

If several stands are provided, then the insertion assembly can advantageously be equipped with a floating loading device, serving several accumulation devices integrated in different stands.

It is worth emphasizing that the advantages described above are obtained thanks to the presence of a management system which controls and coordinates the movements of the different devices, so as to optimize the times necessary for each individual action on the basis of rules that take account of the picking-up and loading needs. On the other hand, the structure of the store often makes it possible to have a plurality of options available for loading or picking-up a set of products.

### Brief description of the drawings

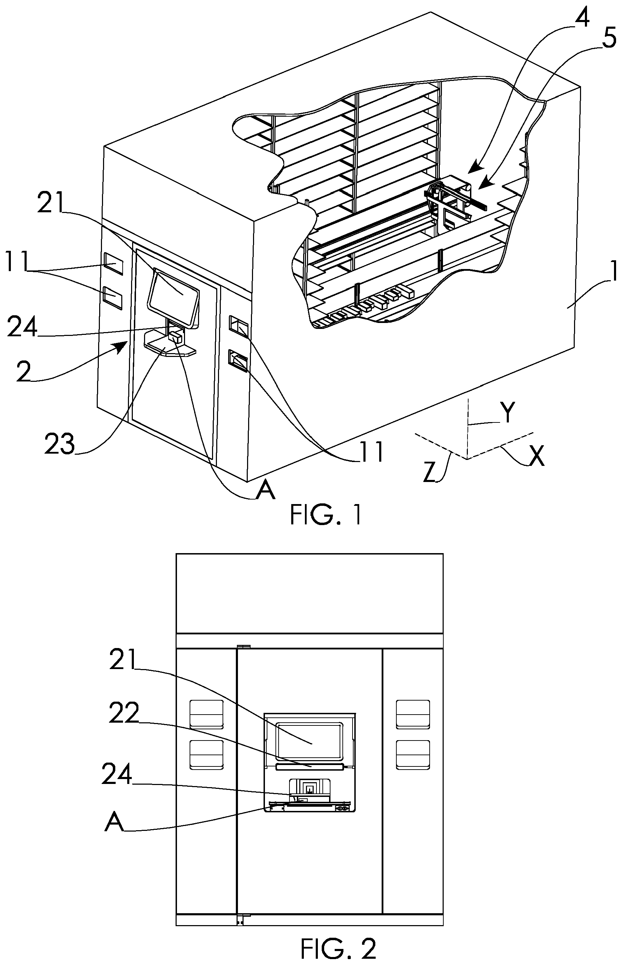

**Fig. 1** shows an axonometric view of the invention, with a partial inside view showing the inside of the box-like body (1), on which a number of output ports (11) and an access port are cut. On the front that part of the insertion assembly (2) which faces the operator is visible. In particular, a screen (21), an input mat (23) on which a product package (A) rests, and a curtain door (24) are visible. The inside view makes it possible to note the internal arrangement of the two stands, in particular that of the most distant one, the conveyor belt (40) of the transfer assembly (4) and a handler (5) being visible. The orthogonal Cartesian axes used in the present description are shown in the lower left corner.
**Fig. 2** shows a front view of the box-like body (1) in which there are an insertion assembly, facing the operator on the front side and, more specifically, the interface screen (21), a retractable keyboard (22), the curtain door (24), and a package (A).

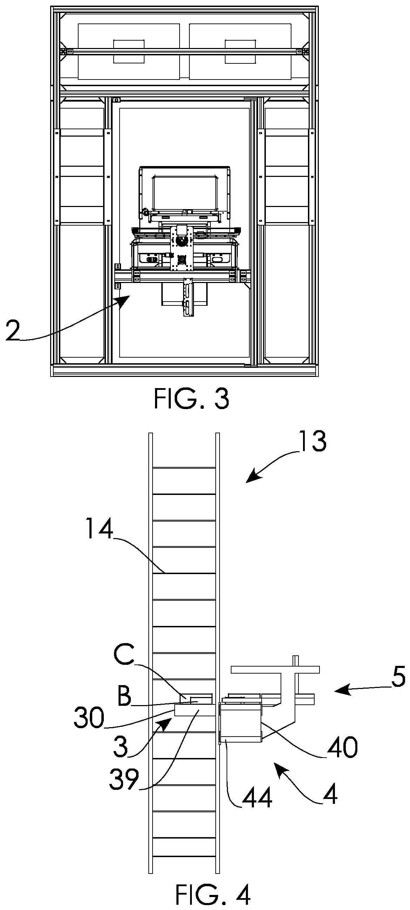

**Fig. 3** shows a view of the inside of the box-like body wherein the rear section of the insertion assembly (2) is visible.
**Fig. 4** shows a cross-sectional view of a stand (13), in which the mat (39) of the conveyor belt (30) of the temporary accumulation device (3), the mat (44) of the conveyor belt (40) of the movable transfer assembly (4) and the handler (5) are visible. On the mat (39) a number of packages (B, C) are shown, ready for being picked-up by the handler.

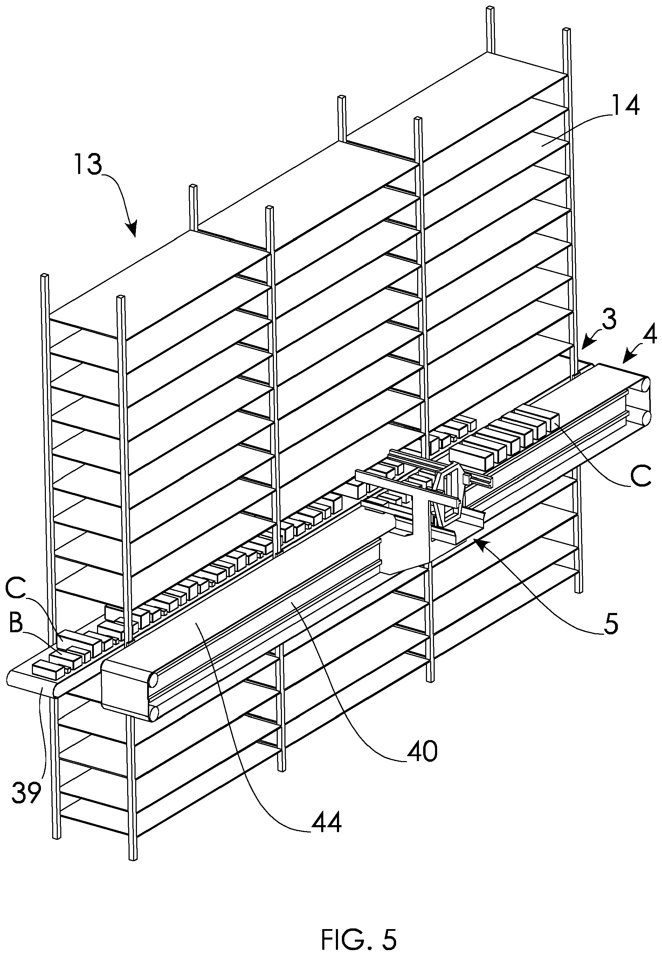

**Fig. 5** shows an axonometric view of the inside of the box-like body (1) with the mat (44) of the conveyor belt (40) of the movable transfer assembly (4), the handler (5), a number of product packages (B, C), located both on the mat (44) and on the mat (39) of the conveyor belt (30) of the temporary accumulation device (3). Note that the handler (5) modified the arrangement of the packages and specifically passed them from the temporary accumulation device onto the movable transfer assembly.

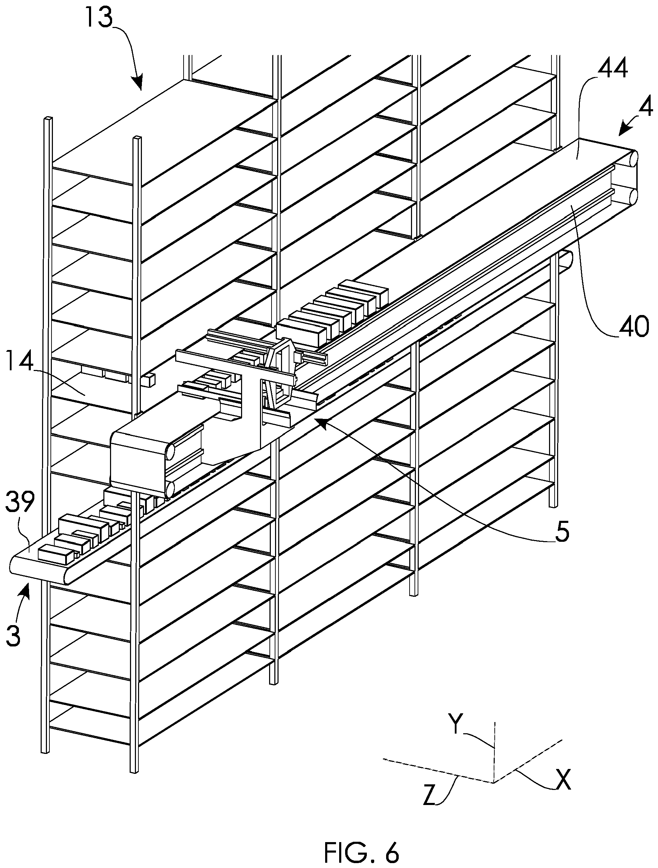

**Fig. 6** shows an axonometric view of the inside of the box-like body (1) showing the handler (5) while picking-up the packages from the mat (44) of the conveyor belt (40) of the movable transfer assembly (4) which rose up to approaching the shelf (14) where the destination aisles are located.
   Note that some packages are aligned according to (Z) in the same aisle of the same shelf (14).
   In order to speed-up the transfer of the packages in the aisles, it is not necessary for the handler (5) to move along the direction (X), being the mat (44) of the conveyor belt (40) of the movable transfer assembly (4) that which progressively aligns the different packages to the destination aisle.
   If necessary, while the transfer assembly (4) moves along (Y) from the position described in Fig. 5 up to the position depicted in this figure, the handler (5) and the mat (44) can move in order to already be in the correct position upon reaching the shelf on which the packages are stored.

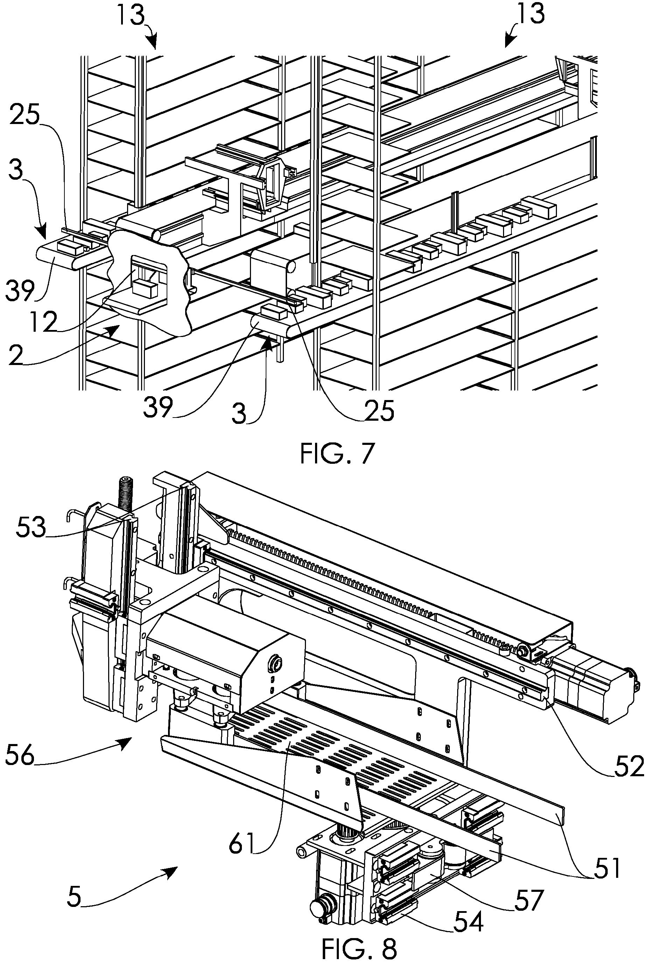

**Fig. 7** shows a detail of an axonometric view of the inside of the box-like body (1) wherein there are shown two stands (13), each of which is served by its respective temporary accumulation device (3) and by a respective movable transfer assembly. In this view, it is possible to note that the insertion assembly (2), an input port (12) of which is shown, can feed the mats (39) of more than one accumulation device (3), via a floating loading device (25) located downstream with respect to the insertion assembly (2) .
**Fig. 8** shows an axonometric view of the handler (5) which depicts the pincer (51) of the pincers assembly (56), the latter sliding according to (Z) along the rails (52) and according to (Y) along the rails (53); one of the rails (52) has been removed to make it easier to read the drawing.
   The figure also shows the sliding shoes (54) which slide on the rails (42) integral with the structure of the movable transfer assembly. The coupling of the sliding shoes (54) with the horizontal rails (42) makes it possible for the handler to slide under the action exerted by the transmission belt (57); the service tray (61) onboard the handler (5) is also visible therein.

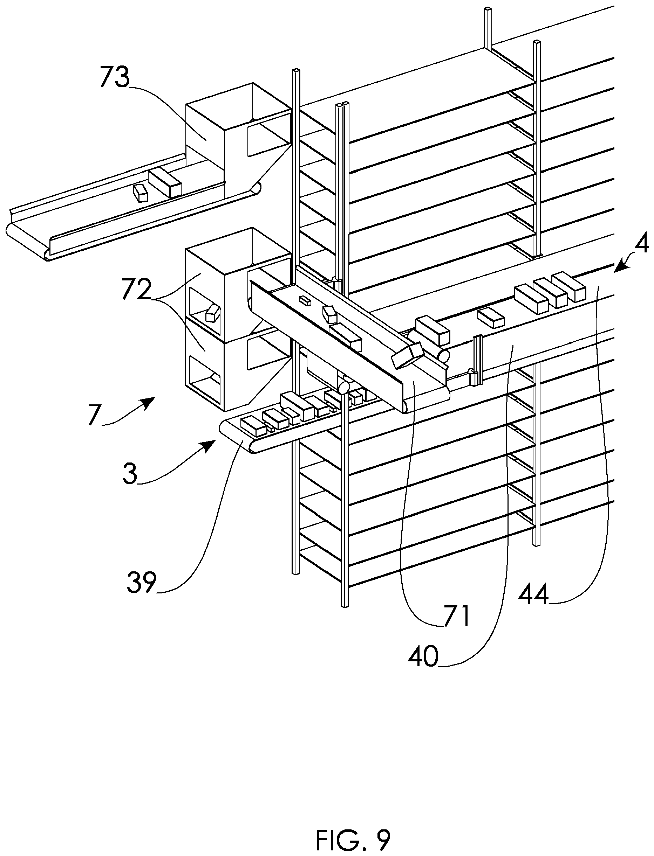

**Fig. 9** shows a detail of an axonometric view of the inside of the box-like body (1) along with the details of the delivery assembly (7).
   The products are transferred from the mat (44) of the conveyor belt (40) of the movable transfer assembly (4) onto the mat of the delivery conveyor belt (71) which delivers them into their respective delivery container (72) which an output port (11) of the box-like body (1) corresponds to. A delivery container (73) is visible on the upper left side of the drawing, used for sending to a remote pick-up point, for instance via a further conveyor belt, as depicted herein.

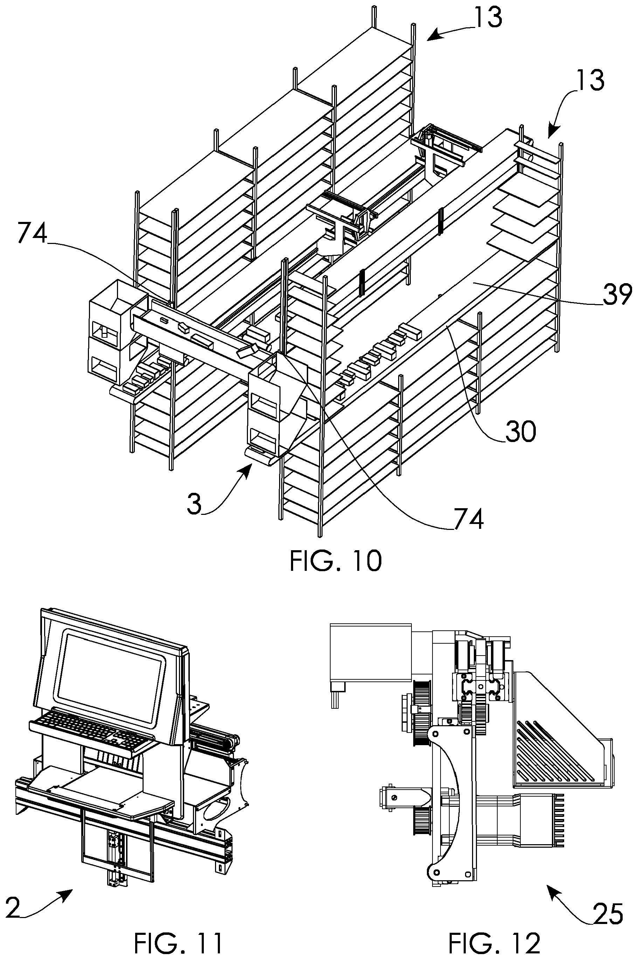

**Fig. 10** shows an axonometric view of the inside of the box-like body complete with two stands (13), in one of which some elements are not visible to make it possible to see the mat (39) of the belt (30) of the temporary accumulation device (3).
**Fig. 11** shows an axonometric view of the insertion assembly (2) .
**Fig. 12** shows a side view of the floating device (25) which picks-up the products from the input mat (23) and delivers them onto the mats (39) of the belts (30) of the temporary accumulation devices (3).

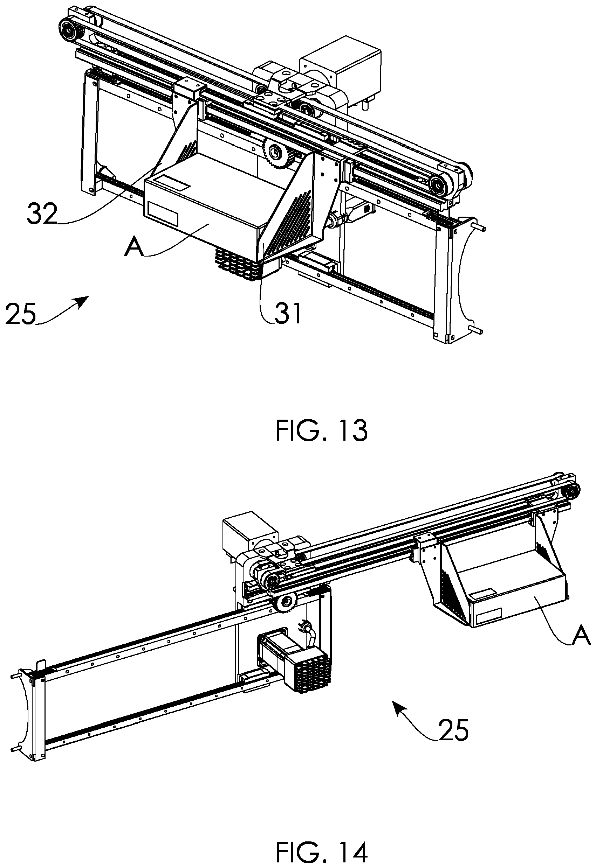

**Fig. 13** shows an axonometric view of the floating loading device (25) along with the pick-up elements (31, 32) involved in shifting a product (A).
**Fig. 14** shows an axonometric view of the floating loading device (25) in its extended position, involved in transporting a product (A).

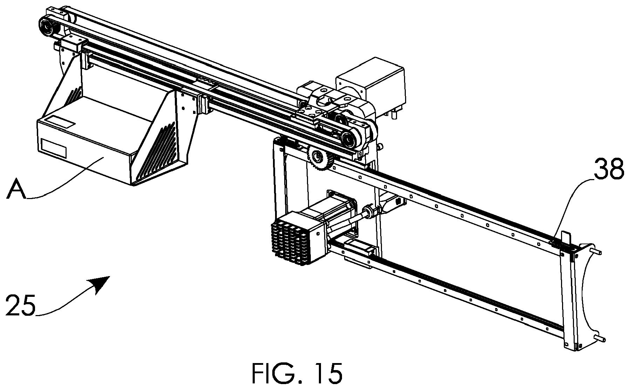

**Fig. 15** shows a further axonometric view of the floating loading device (25) ready for delivering a product onto the loading belt opposite to that shown in Fig. 14. In addition to the elements already described in the latter figure, the present figure highlights one of the rectilinear racks (38) integral with the support structure.

### Detailed description of an embodiment of the invention

In the embodiment here described the automatic store is enclosed by a box-like body (1) comprising two stands (13), each of which comprises a plurality of longitudinal shelves (14), parallel to each other and to a horizontal direction (X) and superimposed according to a vertical direction (Y); along every shelf, storage aisles are defined, which develop according to a direction (Z) orthogonal to both (X) and (Y).

On the front side of the machine there are a service access and an insertion assembly (2) used to insert the packages that can be of a variety of shapes and types. The store here described has four output ports (11) on the front side, cut in said box-like body (1), through which the packages picked-up from the two stands are delivered to the user.

Without the need for any special arrangements, other embodiments can feature a different number of output ports or even remote output ports, as depicted in Fig. 9. The remote output ports, which can be one or more, make it possible to transport the picked-up products up to delivery zones distant from the store.

A screen (21) and a keyboard (22) are also located on the front of the box-like body to interface to the operator; under said screen (21) there is provided an input mat (23) on which the packages rest.

The insertion assembly comprises a small door (24) which rises to make it possible the entry into the box-like body (1) of the package located on said mat (23); said small door (24) subsequently closes, to indicate that the mat is available to receive a new package.

In the embodiment here described two temporary accumulation devices (3) are present, which extend along the direction (X), each of which is dedicated to a stand of which they replace one of the shelves. The temporary accumulation assembly (3) can be positioned along (Y) at such a height as to optimize displacements.

The insertion assembly (2) comprises a sliding floating device (25), provided with a pair of pick-up elements (31, 32) which grasp the packages, which shifts the products from said input mat (23) to one of the temporary accumulation devices (3).

Said pick-up elements (31, 32) are integral with two slidable transmission belts respectively parallel to (Z), so that the mutual position of the pick-up elements can be varied to grasp and release the packages.

The transmission belts that cause said pick-up elements (31, 32) to slide are mounted onto a support element sliding according to (Z) along a fixed rail, so that both the pick-up elements (31, 32) and the support element are floating with respect to the support structure.

After loading the products onto the mat (39) of the conveyor belt (30) of the temporary accumulation device (3), a handler (5) shifts them onto the mat (44) of the conveyor belt (40) of the movable transfer assembly (4). The automatic store here described comprises a movable transfer assembly (4) and a handler (5) for each one of the two stands (13). Said movable transfer assembly is supported by means which allow its movement in the direction (Y) and comprises a conveyor belt (40) whose mat moves parallel to (X).

The length of the conveyor belt (44) is such as to cover the complete length of the shelves (14) of the stand (13) or, in the case of an embodiment that comprises several delivery transfer assemblies, the length is such as to cover the shelves of its competence in any way. Preferably, the conveyor belt (44) features a limited thickness to better exploit the space in the direction (Y).

The translatory movement along (Y) of the movable transfer assembly (4) makes it possible for the conveyor belt (40) to align to the remaining surrounding elements with which it interacts, including the mat (39) of the conveyor belt (30) of the temporary accumulation device (3), the shelves (14) of the stand (13) and the mat (70) of the conveyor belt (71) of the delivery assembly (7).

The just described alignment shall not be meant as a precise positioning of the surfaces on the same plane, but rather as reaching such position as to allow to perform the desired operation, while guaranteeing the correct operation of the handler (5) in any way.

Said handler (5) is slidingly coupled with rails (42) parallel to (X) and integral with the structure of said movable transfer assembly (4) and moves with respect to the latter along said direction (X) irrespective of the movement of the mat (44).

The transfer of the products from the temporary accumulation device to the movable transfer assembly and from this one to the aisles onto the shelves of the stands can take place according to a number of sequences, which can be selected in every instant by the control system, with important and convenient advantages in terms of flexibility and speed of operation.

For instance, in the case of a loading in the absence of pick-up of a high number of packages, as it generally occurs upon arrival of spares, the handler (5) can transfer at least part of the products from the temporary accumulation device (3) to the mat of the movable transfer assembly (4), by arranging them in such a way as to reduce the times necessary for the subsequent displacement thereof in the aisles.

Conversely, in the case of a simultaneous pick-up, the loading onto the mat (44) of the movable transfer assembly (4) will take account of the spaces to be kept free to be able to receive the picked-up packages in order for them to be released to the delivery assembly (7).

The loading onto the mat (44) of the movable transfer assembly (4) also takes account of the final arrangement of the products in the same aisle, so as to make it possible to transfer them via reduced movements of the mat (44).

The arrangement of the products inside the aisles is also warranted by the same handler (5) which comprises a movable pincers assembly (56) equipped with two pincers (51) which are used to pick-up the products.

Surprisingly, should a desired package not be located on the front side of a shelf, the latter can be easily picked-up by temporarily positioning the two packages that precede it onto the mat (44) of the movable transfer assembly.

In the embodiment here described, said handler (5) is provided with a service tray (61), reachable by said pincers (51), wherein one or several packages can be temporarily stored, thus further improving the operating flexibility of the automatic store, in that the store operates as a small-size auxiliary store.

As already said before, the handler (5) comprises a number of sliding shoes (54) by means of which it is slidingly coupled with corresponding horizontal rails (42) integral with the structure of the movable transfer assembly (4), with respect to which it slides thanks to the action exerted by a motion transmission belt (57). The pincers assembly (56) comprises specially developed pincers handling mechanisms (51), which, advantageously, can be flexible and are often made from a carbon fiber.

In a preferred embodiment, each one of the two pincers (51) is driven by an articulated kinematic mechanism symmetrical with respect to that which drives the remaining pincers. The system is driven by a device consisting of a worm screw which engages two pairs of pinions; the four pinions have their axes parallel to each other and lay in one and the same plane, each pair on an opposite side of the worm screw, so that every pair of pinions rotates in the same direction, which is opposite to the direction of rotation of the pair of pinions that lay on the other side of the screw.

Integrally with every pinion rotate a number of cranks whose outer end is rotationally coupled with pincers (51) so that the kinematic mechanism that moves every pincers forms a four-point linkage; advantageously can all pinions and connecting rods be equal to each other, thus implementing an articulated parallelogram; according to a particularly complete solution, adjustment elements are equipped to accurately adjust the kinematic mechanism. Should the handler (5) lay along the direction (X), the pincers assembly (56) can autonomously move both in the direction (Y) and in the direction (Z), by sliding along the rails (53) and (52) present in the handler (5) respectively. In particular, the rails (52) make it possible for the pincers assembly (56) to move along the aisles of the shelves whereas the rails (53) make it possible to lift the packages thanks to the vertical sliding of the pincers assembly (56) with respect to the handler (5) and with respect to the rails (52). The latter feature makes it possible both to deliver a box internally to an aisle behind another product, should the latter feature smaller dimensions in the direction (X), and to bring more products onto the service tray (61) of the handler.

Furthermore, the vertical movement of the pincers assembly (56) makes it possible to grasp the package at any predetermined height, for instance a little bit above its center of gravity, in order to reduce turnover risks.

In the embodiment here described, which is a non limitative one, the store is provided with four output ports (11) located on the front, each of which can advantageously receive the products of one and the same sale.

The delivery assembly (7) comprises a delivery conveyor belt (71), on which the products come from the movable transfer assembly (4), whose conveyor belt (40) conveys the boxes towards the correct output container (72) communicating with an output port (11). Both the passage from the movable transfer assembly (4) to the delivery conveyor belt (71) and the passage from the latter to the output container (72) can take place by gravity. Advantageously, in a particularly complete embodiment of the invention, the delivery conveyor belt (71) can, as a whole, move according to (Y), so as to serve several output containers (72) located at different heights.

The computerized control system of the automatic store coordinates the movements of the individual elements by permanently storing the positions of the individual packages.

## Claims

1. A modular automatic store for packed products, comprising at least one stand (13), composed of a plurality of longitudinal shelves (14) running horizontally along the X direction and laid one on the other according to the Y direction, enclosed in a box-like body (1) with at least one input port (12) through which the products are picked up by an insertion assembly (2) which puts them on a temporary accumulation device (3), and a delivery assembly (7) which distributes them to at least one output port (11), **characterized in that** the displacement of the products from said temporary accumulation device (3) to the shelves (14) and from the latter to said delivery assembly (7) takes place by means of a transfer assembly (4), which moves vertically and comprises a conveyor belt (40), parallel to said shelves (14), along which, in the X direction, at least one independent handler (5) slides, its pincers assembly (56) moving the products from said transfer assembly (4) to said shelves (14) and vice versa, and going away from or nearer to them according to a translation parallel to the Z direction.

2. An automatic store according to the previous claim 1, **characterized in that** said pincers assembly (56) is movable with respect to said handler (5) also in the Y direction, so as to be able to move a product above the other products already present on the mat (44) of the conveyor belt (40) of said transfer assembly (4).

3. An automatic store according to claim 1 or 2, **characterized in that** said temporary accumulation assembly (3) comprises a conveyor belt (30) whose mat (39) runs parallel to the X direction.

4. An automatic store according to any preceding claim, **characterized in that** it comprises a plurality of temporary accumulation assemblies (3) fed by said insertion assembly (2) through a floating loading device (25) according to the Y direction.

5. An automatic store according to claim 4, **characterized in that** said floating loading device (25) comprises a plurality of support elements, reciprocally sliding according to the X direction, on the most external of which a pick-up device slides according to the Y direction.

6. An automatic store according to claim 5, **characterized in that** said sliding pick-up device comprises two movable pick-up elements (31, 32).

7. An automatic store according to any preceding claim, **characterized in that** it comprises a plurality of stands (13) each of which co-operating with its respective temporary accumulation assembly (3).

8. An automatic store according to any preceding claim, **characterized in that** said handler (5) is equipped with a service tray (61) where said pincers assembly (56) can deposit at least one product.

9. An automatic store according to any preceding claim, **characterized in that** the distance between the pincers (51) of said pincers assembly (56) is modified by an four-point linkage.

10. An automatic store according to any preceding claim, **characterized in that** said longitudinal shelves (14) are fixed.

## Patentansprüche

1. Modulares automatisches Lager für verpackte Produkte, umfassend mindestens ein Regal (13), bestehend aus einer Vielzahl von Längsregalböden (14), verlaufend horizontal entlang der X-Richtung und aufeinander angeordnet in der Y-Richtung, eingeschlossen in einem kastenähnlichen Körper (1) mit mindestens einer Eingabeöffnung (12), durch die die Produkte durch ein Einfügungsaggregat (2) aufgenommen werden, das sie auf eine Vorrichtung für die vorübergehende Lagerung (3) legt, und ein Zuführungsaggregat (7), das sie mindestens an eine Ausgabeöffnung (11) verteilt, **dadurch gekennzeichnet, dass** die Umlagerung der Produkte von der Vorrichtung für die vorübergehende Lagerung (3) zu den Regalböden (14) und von diesen zum Zuführungsaggregat (7) mittels eines Transferaggregats (4) stattfindet, das vertikal verfährt und ein Förderband (40) umfasst, parallel zu den Regalböden (14), entlang dessen in der X-Richtung mindestens eine unabhängige Handhabungseinheit (5) gleitet, deren Greiferaggregat (56) die Produkte vom Transferaggregat (4) zu den Regalböden (14) und umgekehrt bewegt, und sich nach einer Verschiebung parallel zur Z-Richtung von diesen entfernt oder sich diesen nähert.

2. Automatisches Lager nach dem vorhergehenden Anspruch 1, **dadurch gekennzeichnet, dass** das Greiferaggregat (56) zur Handhabungseinheit (5) auch in Y-Richtung bewegbar ist, sodass es in der Lage ist, ein Produkt über die anderen Produkte, die sich bereits auf der Matte (44) des Förderbands (40) des Transferaggregats (4) befinden, zu bewegen.

3. Automatisches Lager nach Anspruch 1 oder 2, **dadurch gekennzeichnet, dass** die Vorrichtung für die vorübergehende Lagerung (3) ein Förderband (30) umfasst, dessen Matte (39) parallel zur X-Richtung läuft.

4. Automatisches Lager nach einem der vorhergehenden Ansprüche, **dadurch gekennzeichnet, dass** es eine Vielzahl an Vorrichtungen für die vorübergehende Lagerung (3) umfasst, die vom Einfügungsaggregat (2) durch eine schwebende Ladevorrichtung (25) in Y-Richtung beschickt werden.

5. Automatisches Lager nach Anspruch 4, **dadurch gekennzeichnet, dass** die schwebende Ladevorrichtung (25) eine Vielzahl an Stützelementen aufweist, die gegenseitig in X-Richtung gleiten, wobei am äußersten eine Aufnahmevorrichtung in Y-Richtung gleitet.

6. Automatisches Lager nach Anspruch 5, **dadurch gekennzeichnet, dass** die gleitende Aufnahmevorrichtung zwei bewegbare Aufnahmeelemente (31, 32) aufweist.

7. Automatisches Lager nach einem der vorhergehenden Ansprüche, **dadurch gekennzeichnet, dass** es eine Vielzahl an Regalen (13) umfasst, von denen ein jedes mit seiner jeweiligen Vorrichtung für die vorübergehende Lagerung (3) kooperiert.

8. Automatisches Lager nach einem der vorhergehenden Ansprüche, **dadurch gekennzeichnet, dass** die Handhabungseinheit (5) mit einer Ablage (61) ausgestattet ist, auf der das Greiferaggregat (56) mindestens ein Produkt ablegen kann.

9. Automatisches Lager nach einem der vorhergehenden Ansprüche, **dadurch gekennzeichnet, dass** der Abstand (51) des Greiferaggregats (56) durch eine Vierpunkt-Kupplung geändert wird.

10. Automatisches Lager nach einem der vorhergehenden Ansprüche, **dadurch gekennzeichnet, dass** die Längsregalböden (14) fixiert sind.

## Revendications

1. Système de stockage automatique modulaire pour des produits conditionnés, comprenant au moins une étagère (13), formée d'une pluralité de rayons longitudinaux (14) s'étendant horizontalement le long de la direction X et superposés l'un sur l'autre dans la direction Y, renfermée dans un corps modulaire (1) ayant au moins une porte d'entrée (12) à travers laquelle les produits sont prélevés par un groupe d'insertion (2) lequel les remet dans un dispositif d'accumulation temporaire (3), et un groupe de distribution (7), lequel les distribue à au moins une porte de sortie (11), **caractérisé en ce que** le déplacement des produits dudit dispositif d'accumulation temporaire (3) aux rayons (14) et de ceux-ci audit groupe de distribution (7) a lieu par l'intermédiaire d'un groupe de transfert (4), lequel se mouve verticalement et comprend un ruban transporteur (40), parallèle auxdits rayons (14), le long duquel roule, dans la direction X, au moins un manipulateur indépendant (5), son groupe de pinces (56) déplaçant les produits dudit groupe de transfert (4) auxdits rayons (14) et vice versa, et s'approchant ou s'éloignant d'eux suivant une translation parallèle à la direction Z.

2. Système de stockage automatique selon la revendication précédente 1, **caractérisé en ce que** ledit groupe de pinces (56) est mobile par rapport audit manipulateur (5) aussi dans la direction Y, de telle sorte à pouvoir déplacer un produit au-dessus des autres produits déjà présents sur le tapis (44) du ruban transporteur (40) dudit groupe de transfert (4) .

3. Système de stockage automatique selon la revendication 1 ou 2, **caractérisé en ce que** ledit groupe d'accumulation temporaire (3) comprend un ruban transporteur (30) dont le tapis (39) roule parallèlement à la direction X.

4. Système de stockage automatique selon l'une quelconque des revendications précédentes **caractérisé en ce qu'**il comprend une pluralité de groupes d'accumulation temporaire (3) alimentés par ledit groupe d'insertion (2) à travers un dispositif de chargement flottant (25) dans la direction Y.

5. Système de stockage automatique selon la revendication 4, **caractérisé en ce que** ledit dispositif de chargement flottant (25) comprend une pluralité d'éléments de support, roulant réciproquement dans la direction X, sur le plus extérieur desquels roule un dispositif de prélèvement dans la direction Y.

6. Système de stockage automatique selon la revendication 5, **caractérisé en ce que** ledit dispositif roulant de prélèvement comprend deux éléments mobiles de prélèvement 31, 32).

7. Système de stockage automatique selon une quelconque des revendications précédentes, **caractérisé en ce qu'**il comprend une pluralité de rayons (13) chacun desquels coopérant avec le groupe d'accumulation temporaire respectif (3).

8. Système de stockage automatique selon une quelconque des revendications précédentes, **caractérisé en ce que** ledit manipulateur (5) est équipé d'un plateau de service (61) dans lequel ledit groupe de pinces (56) peut remettre au moins un produit.

9. Système de stockage automatique selon une quelconque des revendications précédentes, **caractérisé en ce que** la distance entre les pinces (51) dudit groupe de pinces (56) est modifiée par un quadrilatère articulé.

10. Système de stockage automatique selon une quelconque des revendications précédentes, **caractérisé en ce que** lesdits rayons longitudinaux (14) sont fixes.
